# EUROPEAN PATENT APPLICATION

(11) **EP 3 671 717 A1**
(43) Date of publication of application: **24.06.2020**
(21) Application number: 18847050.4
(22) Date of filing: 18.05.2018
(51) Int. Cl.: G09G 3/36

(54) **DRIVER CIRCUIT FOR DISPLAY DEVICE, VOLTAGE CONVERSION CIRCUIT, AND DISPLAY DEVICE AND POWER-OFF CONTROL METHOD THEREFOR**

(30) Priority: 17.08.2017 CN 201710706159
(71) Applicant: BOE Technology Group Co., Ltd., Beijing 100015 (CN); Chongqing Boe Optoelectronics Technology Co., Ltd., Chongqing 400714 (CN)
(72) Inventor: HOU, Shuai, Beijing 100176 (CN); XU, Bo, Beijing 100176 (CN); FU, Siqing, Beijing 100176 (CN); LIU, Xinghong, Beijing 100176 (CN)
(74) Representative: Fritzsche, Thomas
(86) International application number: PCT/CN2018/087457
(87) International publication number: WO 2019/033807

(57) **Abstract**

A driving circuit, a voltage conversion circuit, a display device and a control method thereof are provided, which belong to the field of display. The driving circuit comprises a voltage converter and a source driver. The voltage converter has a first terminal for receiving a first voltage from a power supply and a second terminal for outputting a second voltage to the source driver. The driving circuit further comprises a switch sub-circuit and a voltage comparison sub-circuit. The switch sub-circuit is disposed in a voltage transmission path between the second terminal of the voltage converter and the source driver. The voltage comparison sub-circuit is connected to the first terminal of the voltage converter. The voltage comparison sub-circuit is configured to control the switch sub-circuit to disconnect the voltage transmission path when the first voltage is less than a reference voltage.

## Description

### Related Application

The present application claims the benefit of Chinese Patent Application No. 201710706159.9, filed on August 17, 2017, the entire disclosure of which is incorporated herein by reference.

### Technical Field

The present disclosure relates to the field of display, and particularly to a driving circuit for a display device, a voltage conversion circuit, a display device and a control method thereof.

### Background

In an existing display device, a voltage converter is mainly used to convert a supply voltage to voltages required by other components, such as an operating voltage required by a timing controller, a gate driver and a source driver, a gate line turn-on voltage and a gate line turn-off voltage required by the gate driver, a common voltage required by a display panel, and the like. During a normal process of powering off the display device, the voltage converter that loses power supply would use charges stored in a capacitor to power some components in the display device for a short period of time, so as to enable relevant components to finish operations such as cleaning screen.

### Summary

An embodiment of the disclosure provides a driving circuit for a display device comprising a voltage converter and a source driver, the voltage converter comprising a first terminal for receiving a first voltage from a power supply and a second terminal for outputting a second voltage to the source driver. The driving circuit further comprises a switch sub-circuit and a voltage comparison sub-circuit, the switch sub-circuit is disposed in a voltage transmission path between the second terminal of the voltage converter and the source driver, the voltage comparison sub-circuit is connected to the first terminal of the voltage converter and configured to control the switch sub-circuit to disconnect the voltage transmission path if the first voltage is less than a reference voltage.

In some embodiments, the voltage converter further has a third terminal for outputting a constant voltage, the third terminal of the voltage converter being connected to the voltage comparison sub-circuit to provide the constant voltage as the reference voltage to the voltage comparison sub-circuit.

In some embodiments, the driving circuit further comprises a timing controller, and the third terminal of the voltage converter is further connected to the timing controller.

In some embodiments, the voltage comparison sub-circuit comprises a first resistor, a second resistor, and a voltage comparator, a first terminal of the first resistor is connected to the first terminal of the voltage converter, and a second terminal of the first resistor is connected to a first comparison input terminal of the voltage comparator, a first terminal of the second resistor is connected to the first comparison input terminal of the voltage comparator, and a second terminal of the second resistor is connected to a common voltage terminal, a second comparison input terminal of the voltage comparator is configured to receive the reference voltage, and a comparison output terminal of the voltage comparator is connected to the switch sub-circuit.

In some embodiments, the switch sub-circuit comprises a first transistor, a gate of the first transistor being connected to the voltage comparison sub-circuit, a source and a drain of the first transistor being connected to the second terminal of the voltage converter and the source driver, respectively.

Another embodiment of the disclosure provides a voltage conversion circuit, the voltage conversion circuit comprising a first terminal for receiving a first voltage from a power supply and a second terminal for outputting a second voltage to a source driver, wherein the voltage conversion circuit comprises a first voltage conversion sub-circuit, a voltage comparison sub-circuit and a switch sub-circuit, an input terminal of the first voltage conversion sub-circuit is connected to the first terminal of the voltage conversion circuit, an output terminal of the first voltage conversion sub-circuit is connected to the switch sub-circuit, and the first voltage conversion sub-circuit is configured to convert the first voltage into the second voltage, the switch sub-circuit is disposed in a voltage transmission path between the output terminal of the first voltage conversion sub-circuit and the second terminal of the voltage conversion circuit, the voltage comparison sub-circuit is connected to the first terminal of the voltage conversion circuit and the switch sub-circuit, respectively, and the voltage comparison sub-circuit is configured to control the switch sub-circuit to disconnect the voltage transmission path if the first voltage is less than a reference voltage.

In some embodiments, the voltage conversion circuit further comprises a second voltage conversion sub-circuit, an input terminal of the second voltage conversion sub-circuit is connected to the first terminal of the voltage conversion circuit, an output terminal of the second voltage conversion sub-circuit is connected to the voltage comparison sub-circuit, and the second voltage conversion sub-circuit is configured to convert the first voltage into a constant voltage to be provided to the voltage comparison sub-circuit as the reference voltage.

In some embodiments, the voltage comparison sub-circuit comprises a first resistor, a second resistor and a voltage comparator, a first terminal of the first resistor is connected to the first terminal of the voltage conversion circuit, and a second terminal of the first resistor is connected to a first comparison input terminal of the voltage comparator, a first terminal of the second resistor is connected to the first comparison input terminal of the voltage comparator, and a second terminal of the second resistor is connected to a common voltage terminal, a second comparison input of the voltage comparator is configured to receive the reference voltage, and a comparison output terminal of the voltage comparator is connected to the switch sub-circuit.

In some embodiments, the switch sub-circuit comprises a first transistor, a gate of the first transistor being connected to the voltage comparison sub-circuit, a source and a drain of the first transistor being connected to the second terminal of the voltage conversion circuit and the source driver, respectively.

A further embodiment of the disclosure provides a display device comprising the driving circuit or the voltage conversion circuit according to any one of above embodiments.

Yet another embodiment of the disclosure provides a control method for a display device, the display device comprising a voltage converter and a source driver, the voltage converter comprising a first terminal for receiving a first voltage from a power supply, and a second terminal for outputting a second voltage to the source driver, wherein the control method comprises: disconnecting a voltage transmission path between the second terminal of the voltage converter and the source driver in response to the first voltage being less than a reference voltage.

It can be understood that, without causing conflicts, various features in the embodiments described above may be selectively combined to obtain other embodiments. These embodiments also fall within the protection scope of the present disclosure.

### Brief Description of Drawings

In order to more clearly illustrate the technical solutions in embodiments of the present disclosure, the drawings required for describing the embodiments will be briefly introduced below. The drawings mentioned in the description below are merely some embodiments of the present disclosure. Reasonable modifications to the drawings are also encompassed within the scope of the present disclosure.
FIG. 1 is a partial block diagram of a driving circuit for a display device provided by an embodiment of the present disclosure;
FIG. 2 is an effect comparison diagram between a driving circuit provided by an embodiment of the disclosure and a driving circuit provided by a contrastive example;
FIG. 3 is a partial block diagram of a driving circuit for a display device provided by another embodiment of the present disclosure;
FIG. 4 is a circuit configuration diagram of a portion of a driving circuit provided by an embodiment of the present disclosure;
FIG. 5 is a schematic view illustrating an internal circuit configuration of a display device provided by an embodiment of the present disclosure;
FIG. 6 is a schematic view illustrating a voltage conversion circuit provided by another embodiment of the present disclosure.

### Detailed Description of Embodiments

To make the objective, technical solutions and advantages of the disclosure clearer, embodiments of the present disclosure will be further described in detail below with reference to the accompanying drawings. It is apparent that the described embodiments are part of the embodiments of the disclosure, rather than all of them. All other embodiments obtained by those ordinarily skilled in the art based on the described embodiments herein without inventive efforts fall within the protection scope of the application. Unless otherwise defined, technical terms or scientific terms used herein are intended to have ordinary meanings understood by those skilled in the art. The words such as "first" "second" and the like used in the present disclosure do not denote any order, quantity, or importance, but are just used to distinguish different components. The words such as "comprising" and the like means that an element or item preceding the words is intended to encompass elements or items that are listed after the words and their equivalents, but not excluding other elements or items. The words such as "connected" or "linked" and the like are not limited to physical or mechanical connections, but may include electrical connections, and the connections may be direct or indirect.

Inventors of the application have realized that, in some application scenes, the voltage at a supply voltage receiving terminal of the voltage converter in the display device may decrease too fast, so that the voltage provided to a relevant component has dropped below its required operating voltage in the case that the relevant component has not yet have time to complete operations relating to powering-off. For example, upon powering off, the gate driver in the display device needs to output a full-on control signal of a high level so as to output a gate line turn-on voltage to all the gate lines. However, the full-on control signal tends to decrease to a low level prematurely. As a result, some pixels cannot be completely restored to a reset state, resulting in defects such as a visible shadow effect upon powering off.

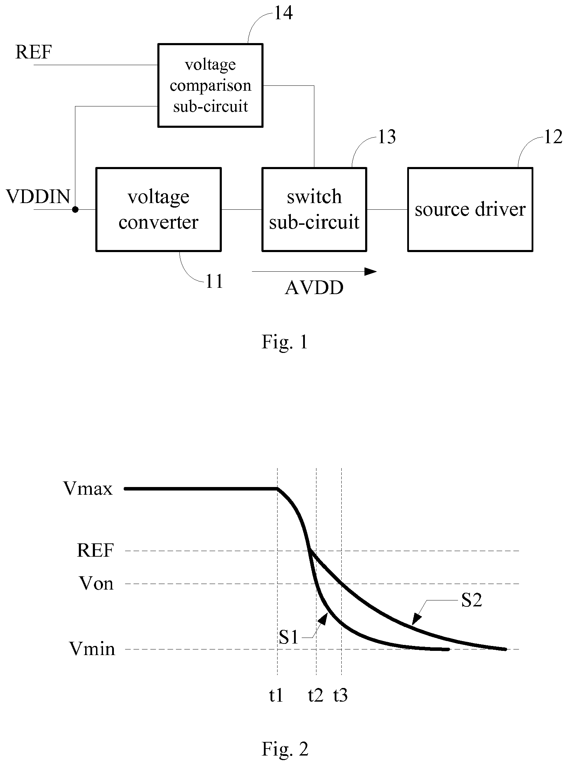

FIG. 1 is a block diagram of a driving circuit for a display device provided by an embodiment of the disclosure. Referring to FIG. 1, the driving circuit comprises a voltage converter 11 and a source driver 12, and further comprises a switch sub-circuit 13 and a voltage comparison sub-circuit 14. The voltage converter 11 has a first terminal for receiving a first voltage VDDIN from a power supply, and a second terminal for outputting a second voltage AVDD to the source driver 12. The switch sub-circuit 13 is disposed in a voltage transmission path (shown by the arrow in FIG. 1) between the second terminal of the voltage converter 11 and the source driver 12. The voltage comparison sub-circuit 14 is connected to the first terminal of the voltage converter 11, and the voltage comparison sub-circuit 14 is configured to control the switch sub-circuit 13 to disconnect the voltage transmission path between the second terminal of the voltage converter 11 and the source driver 12 when the first voltage VDDIN at the first terminal of the voltage converter 11 is less than a reference voltage REF. The second voltage described above is an operating voltage required for the source driver to generate a data signal, and the source driver can generate the data signal based on the second voltage and information of an image to be displayed.

In an embodiment, the voltage converter mainly comprises a DC-DC voltage conversion circuit (which may be, for example, disposed in a chip). Of course, the voltage converter may also have other functions such as providing other voltages by conversion, and may have a respective number of connection terminals. Moreover, the voltage converter may include subcircuits or components shared by multiple functions when having more than two functions at the same time.

The above-described driving circuit may further comprise other circuit structures not mentioned above. For example, the voltage converter 11 may be connected to a number of other circuits through a number of connection terminals respectively to provide required electrical signals for those circuits. In practice, other structures may be disposed in the driving circuit as needed, and examples of the driving circuit for a display device are not limited to the structure shown in FIG. 1.

In a contrastive example, the driving circuit comprises a voltage converter 11 and a source driver 12 directly connected to each other, but does not comprise the switch sub-circuit 13 and the voltage comparison sub-circuit 14 described above. The first terminal of the voltage converter 11 is provided with a capacitor. The capacitor can be charged when the voltage converter 11 receives a voltage from a power supply, and the voltage converter 11 can be powered by charges stored in the capacitor for a period of time when it loses power supply. Thus, when the display device is powered off, with the charges stored in the capacitor, the voltage converter 11 will continue to output a plurality of electrical signals including the first voltage AVDD for a period of time so as to maintain the operating states of other circuit structures to which the electrical signals are provided. However, as the charges stored in the capacitor are consumed over time, the voltage at the first terminal of the voltage converter 11 gradually decreases, and the operating states of these circuit structures cannot be maintained when it decreases to a certain extent.

As an example, FIG. 2 illustrates a curve showing a variation in the voltage at the first terminal of the voltage converter 11 in the contrastive example over time. Referring to the curve S1 in FIG. 2, when the display device is powered off, the voltage at the first terminal of the voltage converter 11 will decrease from a maximum value Vmax at a first time instant t1. As the charges stored in the capacitor are consumed over time, the voltage at the first terminal of the voltage converter 11 decreases to a critical value Von capable of maintaining the operating states of other circuit structures at a second time instant t2, and then gradually decreases to a minimum value Vmin when the capacitor is completely discharged. Since the voltage converter 11 is just able to maintain the operating states of other circuit structures when the voltage at the first terminal of the voltage converter 11 is at the critical value Von, for the curve S1, the operating states of other circuit structures cannot be maintained after the second time instant t2, and the unfinished operations of these circuit structures will not be completed. For example, the gate driver and the source driver need to cooperate to avoid the visible shadow effect upon powering off the display device. In this process, the gate driver needs to output a gate turn-on voltage to each row of gate lines using the voltage signal provided by the voltage converter. However, if the first voltage provided by the voltage converter drops prematurely below an allowable range of the gate turn-on voltage as the voltage at the first terminal of the voltage converter 11 decreases, a liquid crystal capacitor in the display area of the display device will stop discharging in a state where it may not be discharged completely, and residual charges result in, for example, a problem of the visible shadow effect.

FIG. 2 further illustrates a curve showing a variation in the voltage at the first terminal of the voltage converter 11 according to an embodiment of the disclosure over time. Referring to the curve S2 in FIG. 2, when the display device in which the driving circuit resides is powered off, the voltage at the first terminal of the voltage converter 11 will decrease from the maximum value Vmax at the first time instant t1. As the charges stored in the capacitor are consumed over time, the variation curve S2 of the voltage at the first terminal of the voltage converter 11 will suddenly change in the slope when the voltage decreases to the reference voltage REF. At that time, the voltage comparison sub-circuit 14 controls the switch sub-circuit 13 to disconnect the voltage transmission path between the second terminal of the voltage converter 11 and the source driver 12, which causes the voltage converter 11 to stop providing the second voltage to the source driver 12, so that relevant circuits in the source driver 12 would no longer generate power consumption. Thus, the speed at which the charges stored in the capacitor are consumed will drop abruptly, forming a sudden change in the slope of the curve S2 at the reference voltage REF as shown in FIG. 2. The second voltage AVDD can provide a bias voltage for a digital circuit of the source driver 12, and the digital circuit does not need to perform any operation when the display device is being powered off. As a result, disconnecting the voltage transmission path between the voltage converter and the source driver would not affect the operations of other circuit structures upon powering off the display device.

Thus, for the curve S2, after the second voltage decreases to the reference voltage REF, it looks gentler than the curve S1, and the second voltage drops to the critical value Von at the third time instant t3 after the second time instant t2. By comparison, it can be seen that the driving circuit provided by the embodiment of the disclosure can give more time "t3-t2" than the contrastive example for the voltage converter 11 to maintain the operating states of other circuit structures, which helps to enable these circuit structures to perform operations that need to be completed upon powering off the display device. For example, during the process in which the gate driver and the source driver cooperate to avoid the visible shadow effect upon powering off the display device, the time period "t3-t2" can facilitate the gate driver to output a gate turn-on voltage in the allowable range, which is advantageous for the liquid crystal capacitor to be discharged, and thus helps to eliminate or alleviate the above problem regarding the visible shadow effect upon powering off the display device.

It can be appreciated that, with the voltage comparison sub-circuit and the switch sub-circuit in the embodiment of the disclosure, the connection between the second terminal of the voltage converter and the source driver can be disconnected when the first voltage drops below the reference voltage, so as to interrupt the power consumption caused by the second voltage, slow down the decreasing speed of the first voltage VDDIN, and prolong the time for relevant components to perform operations such as cleaning screen, which thus helps to avoid display abnormalities upon powering off caused by a too fast power-down, thereby improving the performance of the display device.

FIG. 2 illustrates curves showing variations in the voltage of the capacitor when the capacitor at the first terminal of the voltage converter 11 is discharged. The overall degrees of steepness and gentleness are dependent on the capacitance value of the capacitor, and the capacitor may be, for example, disposed in the driving circuit, or disposed outside the driving circuit and connected to the first terminal of the voltage converter 11. Alternatively, it may be a parasitic capacitor. The application makes no limitations to the capacitor herein.

The critical value Von mentioned above is mainly used to explain the technical effects of embodiments of the present disclosure, and may not be a parameter actually set for the driving circuit. The above-described reference voltage REF may be, for example, a voltage signal generated inside or outside the driving circuit, whose magnitude may be set as needed. For example, it can be inferred from the description above that the reference voltage REF should be smaller than the above maximum value Vmax and larger than the above critical value Von. On this basis, the closer the reference voltage REF is to the maximum value Vmax, the longer the time period "t3-t2" shown in FIG. 2 will be, which is more advantageous to extend the operating time of relevant components. However, if the reference voltage REF is excessively close to the maximum value Vmax, it is easy to mistakenly cut off the provision of the second voltage (AVDD) due to fluctuation of the voltage value in a scene other than powering off the display device, thereby affecting the normal operation of the driving circuit. Therefore, it is possible to determine a value for the reference voltage REF in an actual application by taking into account the above factors, so as to achieve a desired effect.

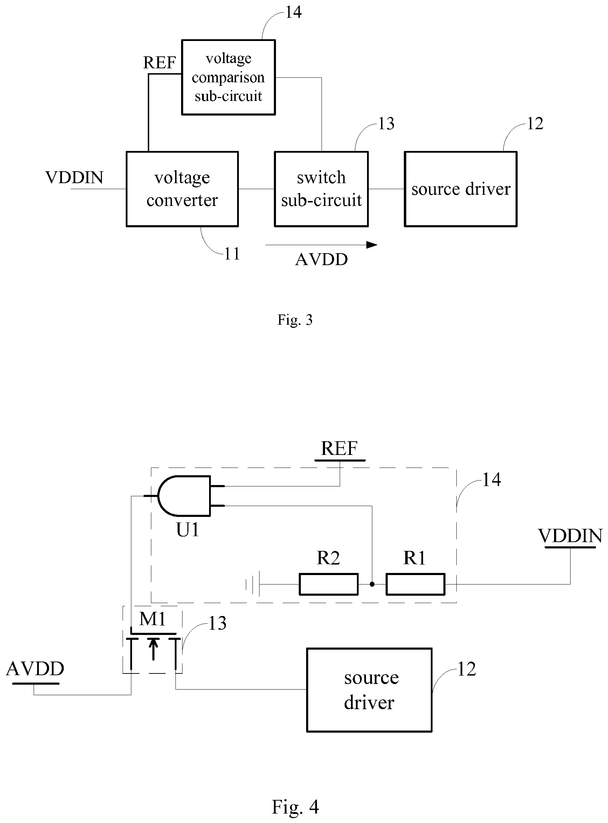

In another embodiment, as shown in FIG. 3, the voltage converter 11 further has a third terminal for outputting a constant voltage, and the third terminal of the voltage converter 11 is connected to the voltage comparison sub-circuit 14 to provide the constant voltage to the voltage comparison sub-circuit 14 as the reference voltage REF. That is, in this embodiment, the voltage converter itself can generate the reference voltage REF for the voltage comparison sub-circuit based on the first voltage VDDIN, which is advantageous for simplifying the circuit configuration.

FIG. 4 is a circuit diagram of a portion of a driving circuit provided by an embodiment of the present disclosure. Referring to FIG. 4, the voltage comparison sub-circuit 14 in this embodiment specifically comprises a first resistor R1, a second resistor R2, and a voltage comparator U1. The first terminal of the first resistor R1 is connected to the first terminal of the voltage converter (the first voltage VDDIN can thus be received), and the second terminal of the first resistor R1 is connected to a first comparison input terminal of the voltage comparator U1. The first terminal of the second resistor R2 is connected to the first comparison input terminal of the voltage comparator U1, and the second terminal of the second resistor R2 is connected to a common voltage terminal. A second comparison input terminal of the voltage comparator U1 receives the reference voltage REF, and a comparison output terminal of the voltage comparator U1 is connected to the switch sub-circuit 13. The switch sub-circuit 13 in this embodiment comprises a first transistor M1. The gate of the first transistor M1 is connected to the voltage comparison sub-circuit 14, and the source and the drain thereof are connected to the second terminal of the voltage converter (the second voltage AVDD can thus be received) and the source driver 12, respectively.

By comparing FIG. 1 with FIG. 4, it can be seen that the voltage at the first terminal of the voltage converter 11 can be input to the first comparison input terminal of the voltage comparator U1 after being divided by the first resistor R1 and the second resistor R2, so that the voltage comparator U1 can compare its magnitude with the reference voltage REF, and output, when its magnitude is less than the reference voltage REF, to the switch sub-circuit 13 a high level or low level signal that controls the switch sub-circuit 13 to be disconnected. The first transistor M1 of the switch sub-circuit 13 may become a turn-off state upon receiving the control signal from the voltage comparison sub-circuit 14, so that the voltage transmission path through which the second terminal of the voltage converter 11 outputs the second voltage AVDD to the source driver 12 is disconnected. Of course, the circuit configuration of the switch sub-circuit 13 and the voltage comparison sub-circuit 14 shown in this embodiment is merely an example, and possible examples of the switch sub-circuit and the voltage comparison sub-circuit are not so limited.

It can be understood that, for an existing driving circuit of a display device, the switch sub-circuit and the voltage comparison sub-circuit may be added by referring to the above embodiments. For example, embodiments of the disclosure may be implemented by adding respective elements and lines on the circuit board of the driving circuit. As an example of another implementation, the switch sub-circuit and the voltage comparison sub-circuit may also be disposed in existing components of the driving circuit.

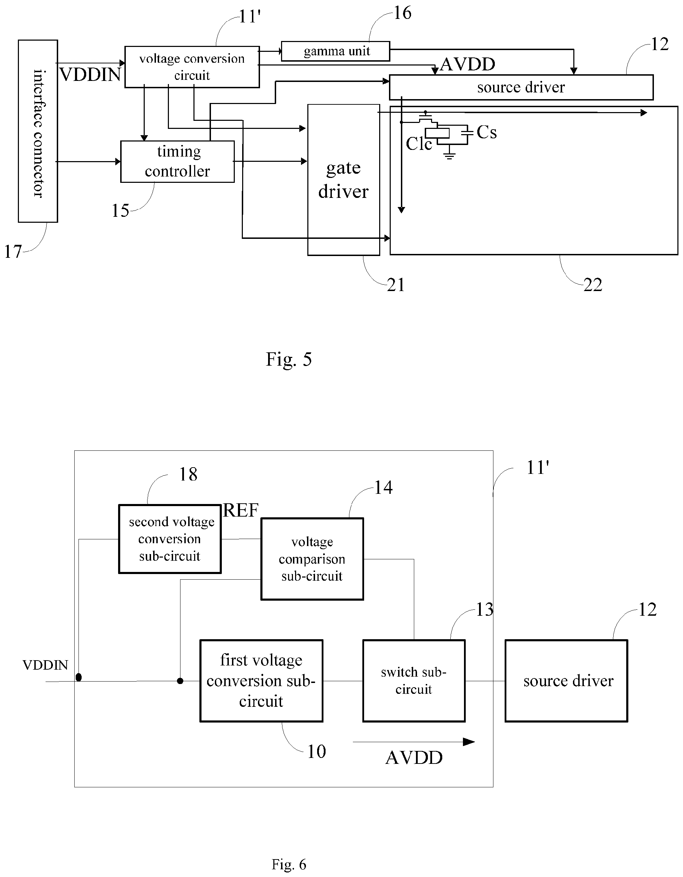

As an example, FIG. 5 is a schematic view illustrating an internal circuit configuration of a display device provided by an embodiment of the disclosure. Referring to FIG. 5, the display device according to an embodiment of the disclosure comprises a driving circuit and an array substrate. The driving circuit comprises a voltage conversion circuit 11' and a source driver 12, and further comprises a timing controller 15, a gamma unit 16, and an interface connector 17. A pixel circuit 22 is disposed within the display area of the array substrate, and a gate driver 21 is disposed outside the display area of the array substrate. In this embodiment, the voltage conversion circuit 11' has a first terminal for receiving a first voltage VDDIN from a power supply, and a second terminal for outputting a second voltage AVDD to the source driver 12.

As an example of an implementation of the voltage conversion circuit 11', as shown in FIG. 6, the voltage conversion circuit 11' has a first terminal for receiving a first voltage VDDIN from a power supply, and a second terminal for outputting a second voltage to the source driver 12. The voltage conversion circuit 11' may include a first voltage conversion sub-circuit 10, a voltage comparison sub-circuit 14 and a switch sub-circuit 13. The input terminal of the first voltage conversion sub-circuit 10 is connected to the first terminal of the voltage conversion circuit, the output terminal of the first voltage conversion sub-circuit 10 is connected to the switch sub-circuit 13, and the first voltage conversion sub-circuit is configured to convert the first voltage into the second voltage AVDD. The switch sub-circuit 13 is disposed in a voltage transmission path between the output terminal of the first voltage conversion sub-circuit and the second terminal of the voltage conversion circuit. The voltage comparison sub-circuit 14 is connected to the first terminal of the voltage conversion circuit and the switch sub-circuit, respectively, and the voltage comparison sub-circuit is configured to control the switch sub-circuit to disconnect the voltage transmission path when the voltage at the first terminal is less than the reference voltage. In practice, the first voltage conversion sub-circuit may be implemented, for example, by referring to a DC-DC conversion circuit, and the switch sub-circuit and the voltage comparison sub-circuit may be implemented, for example, according to the circuit structures shown in FIG. 4, which circuit structures may be, for example, packaged in the same chip. In this case, the solution of the present disclosure can be implemented by replacing the original DC-DC chip in the driving circuit.

Further, as shown in FIG. 6, in another embodiment, the voltage conversion circuit further includes a second voltage conversion sub-circuit 18. The input terminal of the second voltage conversion sub-circuit 18 is connected to the first terminal of the voltage conversion circuit, the output terminal of the second voltage conversion sub-circuit 18 is connected to the voltage comparison sub-circuit, and the second voltage conversion sub-circuit is configured to convert the first voltage into a constant voltage to be provided as the reference voltage REF to the voltage comparison sub-circuit.

As an example of another implementation of the voltage conversion circuit 11', the voltage conversion circuit 11' includes a processor and a memory (not shown). The processor is connected to the first terminal and the second terminal of the voltage conversion circuit 11' respectively via an interface circuit. A first instruction, a second instruction and a third instruction are stored in the memory. The processor can convert the first voltage from the first terminal of the voltage conversion circuit 11' into the second voltage outputted at the second terminal of the voltage conversion circuit 11' by executing the first instruction, trigger execution of the third instruction when the voltage at the first terminal of the voltage conversion circuit 11' is less than the reference voltage by executing the second instruction, and stop the output of the voltage at the second terminal of the voltage conversion circuit 11' by executing the third instruction.

In addition to the above hardware implementation and software implementation, the functions of the switch sub-circuit and the voltage comparison sub-circuit described above may also be implemented by a combination of software and hardware. For example, the processor executes a fourth instruction in the memory so that a control signal is outputted to the gate of the above first transistor M1 when the voltage at the first terminal of the voltage conversion circuit 11' is less than the reference voltage, so as to enable the first transistor M1 to disconnect the voltage transmission path for transmitting the second voltage. Of course, the possible implementations in practice may not be limited to the above examples.

Referring to FIG. 5, based on the illustrated circuit configuration, the interface connector 17 in the driving circuit can transmit the supply voltage (including the first voltage VDDIN) to the voltage conversion circuit 11' through a connection with an external interface, so that the voltage conversion circuit 11' provides required operating voltages for the source driver 12, the timing controller 15, the gamma unit 16, the gate driver 21, and the pixel circuit 22, respectively, using the supply voltage. Moreover, the interface connector 17 can transmit a signal related to displaying to the timing controller 15 through a connection with an external interface, so that the timing controller 15 controls the output timing of the gate driver 21 and the source driver 12 according to the received signal, and thereby controlling the pixel circuit 22 to charge and discharge a liquid crystal capacitor Clc and a storage capacitor Cs in each pixel unit to realize image display. In this process, the gamma unit 16 may regulate the data voltage outputted by the source driver 12 as a whole, thereby realizing adjustment to the image display. Since the display device shown in FIG. 5 comprises the voltage conversion circuit 11' that cuts off the output of the second voltage AVDD when the first voltage VDDIN drops below the reference voltage, compared to the prior art, it is able to prolong the time for relevant components to perform operations such as cleaning screen upon powering off the display device, which helps to avoid or mitigate display abnormalities caused by a too fast power-down, thereby improving the performance of the display device.

The display device in embodiments of the present disclosure may be any product or component having a display function such as a display panel, a mobile phone, a tablet computer, a television, a display, a notebook computer, a digital photo frame, a navigator, and the like. Moreover, although the embodiment is described above taking liquid crystal displays as an example, in practice, embodiments of the disclosure may also be applied to other display devices such as an organic light emitting diode (OLED) display device, a quantum dot light emitting diode (QLED) display device, and the like, which can also prolong the time for relevant components to perform operations such as cleaning screen upon powering off the display device, and help to avoid or mitigate display abnormalities upon caused by a too fast power-down, improving the performance of the display device.

Furthermore, in any of the above embodiments, the reference voltage may be generated by an internal circuit of the driving circuit. For example, in the embodiment shown in FIG. 3 as discussed previously, the voltage converter further has a third terminal for outputting a constant voltage, and the third terminal of the voltage converter is connected to the voltage comparison sub-circuit to provide the constant voltage as the reference voltage to the voltage comparison sub-circuit. In another example, the voltage conversion circuit may include a second voltage conversion sub-circuit. The input terminal of the second voltage conversion sub-circuit is connected to the first terminal of the voltage conversion circuit, and the output terminal of the second voltage conversion sub-circuit is connected to the voltage comparison sub-circuit. The second voltage conversion sub-circuit is configured to convert the first voltage at the input terminal into a constant voltage at the output terminal to be provided to the voltage comparison sub-circuit as the reference voltage.

It can be understood that the reference voltage obtained by outputting a constant voltage may not decrease as the voltage at the first terminal of the voltage converter or the voltage conversion circuit decreases, thus the voltage comparison sub-circuit may be provided with a reference voltage with a stable amplitude when the display device is powered off, which will not cause an abnormal operation of the voltage comparison sub-circuit for being not affected by the variation in the first voltage at the first terminal of the voltage converter or voltage conversion circuit. Compared to the way in which it is required to individually provide a reference voltage externally, this embodiment is more advantageous for reducing the number of external ports of the driving circuit and simplifying the overall structure. Moreover, in some embodiments, the voltage converter or voltage conversion circuit itself may provide the timing controller with a voltage signal having a constant amplitude of, for example, 1.2V. For example, the third terminal of the voltage converter is further connected to the timing controller. Owing to this, the voltage signal can be directly used as a reference voltage to be connected to the voltage comparison sub-circuit, which further simplifies the structure of the driving circuit.

Based on the same inventive concept, a further embodiment of the present disclosure provides a control method for a display device. The display device comprises a voltage converter and a source driver. The voltage converter has a first terminal for receiving a first voltage from a power supply, and a second terminal for outputting a second voltage to the source driver. The control method comprises: disconnecting a voltage transmission path between the second terminal of the voltage converter and the source driver in response to the first voltage at the first terminal of the voltage converter being less than a reference voltage. It can be understood that the implementations of the switch sub-circuit and the voltage comparison sub-circuit as described above can be regarded as examples of implementation of the above control method, and therefore details of the control method will not be described again.

In conclusion, with embodiments of the present disclosure, the output of the second voltage AVDD can be cut off when the first voltage drops below the reference voltage, so as to interrupt the power consumption caused by the second voltage, slow down the falling speed of the first voltage VDDIN, and prolong the time for relevant components to perform operations such as cleaning screen when powering off the display device, which thus helps to avoid or relieve display abnormalities caused by a too fast power-down, thereby improving the performance of the display device.

What have been stated above are merely embodiments of the present disclosure, and are not intended to limit the present disclosure. Any modifications, equivalent substitutions, improvements, etc., which are made within the spirit and principle of the present disclosure, should be encompassed in the scope of the application.

## Claims

1. A driving circuit for a display device comprising a voltage converter and a source driver, the voltage converter comprising a first terminal for receiving a first voltage from a power supply and a second terminal for outputting a second voltage to the source driver,
wherein the driving circuit further comprises a switch sub-circuit and a voltage comparison sub-circuit,
wherein the switch sub-circuit is disposed in a voltage transmission path between the second terminal of the voltage converter and the source driver, the voltage comparison sub-circuit is connected to the first terminal of the voltage converter and configured to control the switch sub-circuit to disconnect the voltage transmission path if the first voltage is less than a reference voltage.

2. The driving circuit according to claim 1, wherein the voltage converter further has a third terminal for outputting a constant voltage, the third terminal of the voltage converter being connected to the voltage comparison sub-circuit to provide the constant voltage as the reference voltage to the voltage comparison sub-circuit.

3. The driving circuit according to claim 2, wherein the driving circuit further comprises a timing controller, and the third terminal of the voltage converter is further connected to the timing controller.

4. The driving circuit according to any one of claims 1 to 3, wherein the voltage comparison sub-circuit comprises a first resistor, a second resistor, and a voltage comparator,
wherein a first terminal of the first resistor is connected to the first terminal of the voltage converter, and a second terminal of the first resistor is connected to a first comparison input terminal of the voltage comparator,
wherein a first terminal of the second resistor is connected to the first comparison input terminal of the voltage comparator, and a second terminal of the second resistor is connected to a common voltage terminal,
wherein a second comparison input terminal of the voltage comparator is configured to receive the reference voltage, and a comparison output terminal of the voltage comparator is connected to the switch sub-circuit.

5. The driving circuit according to claim 4, wherein the switch sub-circuit comprises a first transistor, a gate of the first transistor being connected to the voltage comparison sub-circuit, a source and a drain of the first transistor being connected to the second terminal of the voltage converter and the source driver, respectively.

6. A voltage conversion circuit, the voltage conversion circuit comprising a first terminal for receiving a first voltage from a power supply and a second terminal for outputting a second voltage to a source driver, wherein the voltage conversion circuit comprises a first voltage conversion sub-circuit, a voltage comparison sub-circuit and a switch sub-circuit,
wherein an input terminal of the first voltage conversion sub-circuit is connected to the first terminal of the voltage conversion circuit, an output terminal of the first voltage conversion sub-circuit is connected to the switch sub-circuit, and the first voltage conversion sub-circuit is configured to convert the first voltage into the second voltage,
wherein the switch sub-circuit is disposed in a voltage transmission path between the output terminal of the first voltage conversion sub-circuit and the second terminal of the voltage conversion circuit,
wherein the voltage comparison sub-circuit is connected to the first terminal of the voltage conversion circuit and the switch sub-circuit, respectively, and the voltage comparison sub-circuit is configured to control the switch sub-circuit to disconnect the voltage transmission path if the first voltage is less than a reference voltage.

7. The voltage conversion circuit according to claim 6, wherein the voltage conversion circuit further comprises a second voltage conversion sub-circuit,
wherein an input terminal of the second voltage conversion sub-circuit is connected to the first terminal of the voltage conversion circuit, an output terminal of the second voltage conversion sub-circuit is connected to the voltage comparison sub-circuit, and the second voltage conversion sub-circuit is configured to convert the first voltage into a constant voltage to be provided to the voltage comparison sub-circuit as the reference voltage.

8. The voltage conversion circuit according to claim 6 or 7, wherein the voltage comparison sub-circuit comprises a first resistor, a second resistor and a voltage comparator,
wherein a first terminal of the first resistor is connected to the first terminal of the voltage conversion circuit, and a second terminal of the first resistor is connected to a first comparison input terminal of the voltage comparator,
wherein a first terminal of the second resistor is connected to the first comparison input terminal of the voltage comparator, and a second terminal of the second resistor is connected to a common voltage terminal,
wherein a second comparison input of the voltage comparator is configured to receive the reference voltage, and a comparison output terminal of the voltage comparator is connected to the switch sub-circuit.

9. The voltage conversion circuit according to claim 8, wherein the switch sub-circuit comprises a first transistor, a gate of the first transistor being connected to the voltage comparison sub-circuit, a source and a drain of the first transistor being connected to the second terminal of the voltage conversion circuit and the source driver, respectively.

10. A display device comprising the driving circuit according to any one of claims 1 to 5, or the voltage conversion circuit according to any one of claims 6 to 9.

11. A control method for a display device, the display device comprising a voltage converter and a source driver, the voltage converter comprising a first terminal for receiving a first voltage from a power supply, and a second terminal for outputting a second voltage to the source driver, wherein the control method comprises:
disconnecting a voltage transmission path between the second terminal of the voltage converter and the source driver in response to the first voltage being less than a reference voltage.
